# EUROPÄISCHE PATENTSCHRIFT

(11) **EP 0 554 573 B1**
(45) Veröffentlichungstag und Bekanntmachung des Hinweises auf die Patenterteilung: **06.03.1996**
(21) Anmeldenummer: 92122160.2
(22) Anmeldetag: 31.12.1992
(51) Int. Cl.: B60G 11/27

(54) **Luftfeder**
Pneumatic spring
Coussin d'air

(30) Priorität: 06.02.1992 DE 4203372
(43) Veröffentlichungstag der Anmeldung: 11.08.1993
(73) Patentinhaber: BPW Bergische Achsen Kommanditgesellschaft, D-51674 Wiehl (DE)
(72) Erfinder: Steiner, Helmut, Ing., W-5276 Wiehl (DE)
(74) Vertreter: Stenger, Watzke & Ring Patentanwälte

(56) Entgegenhaltungen:
- DK-C- 16 702
- DK-C- 20 406
- FR-A- 2 201 736
- US-A- 2 917 319
- SOVIET INVENTIONS ILLUSTRATED Section PQ, Week 8414, Derwent Publications Ltd., London, GB; Class Q, AN 84-087602 & SU-A-1 025 534 (BRYAN TRANSP MECH)

## Beschreibung

Gegenstand der Erfindung ist eine Luftfeder für Luftfederachsen mit einem fahrgestellfesten Deckel und einem Tauchkolben sowie einem dazwischen eingesetzten Rollbalg, wobei der Tauchkolben auf einem rückwärtigen Ende eines Längslenkers abgestützt ist.

Eine Luftfeder der vorstehend beschriebenen Gattung ist aus der DE-C-31 47 231 bekannt. Diese Luftfedern haben sich im normalen Fahrbetrieb bewährt, sind aber für eine Kran- und Bahnverladung nicht geeignet, weil dabei der Rollbalg durch das Gewicht der Achse vollständig ausgerollt wird und hierbei ein Vakuum erzeugt, so daß der Rollbalg vom Gewicht der Achse aus seiner Einbindung am Deckel oder Tauchkolben herausgezogen werden kann. Außerdem besteht die Gefahr, daß der Rollbalg beim Absetzen des Fahrzeuges nicht wieder nach außen über den Tauchkolben abrollt, sondern nach innen eingefaltet und beschädigt wird. Um dies zu verhindern, ist es bekannt, zwischen dem Fahrzeugrahmen und der Achse besondere Fangvorrichtungen vorzusehen.

Der Erfindung liegt die **Aufgabe** zugrunde, die eingangs beschriebene Luftfeder derart weiterzubilden, daß sie auch für eine Kran- und Bahnverladung geeignet ist.

Die **Lösung** dieser Aufgabenstellung durch die Erfindung ist dadurch gekennzeichnet, daß dem Tauchkolben an seiner Unterseite offen ist, daß auf dem Längslenker ein in den Tauchkolben passender Topf befestigt ist und daß Tauchkolben und Topf voneinander getrennte, auseinanderbewegbare Bauteile sind.

Die bei der erfindungsgemäß ausgebildeten Luftfeder als voneinander getrennte Bauteile ausgeführten Tauchkolben und Topf greifen im normalen Fahrbetrieb ineinander, können aber bei einer Kran- und Bahnverladung des Fahrzeuges sich voneinander trennen und auseinanderbewegen, so daß das Gewicht der Achse nicht mehr am Tauchkolben zieht und den Rollbalg streckt. Zum Heben und Senken funktioniert diese Konstruktion mit einer einfachen Druckluftinstallation.

Aus der US-A-2 917 319 und der FR-A-22 01 736 sind zwar ebenfalls Luftfedern der eingangs beschriebenen Art bekannt, bei denen der Tauchkolben an seiner Unterseite offen ist. Bei beiden Konstruktionen ist jedoch der Tauchkolben mit dem auf dem Längslenker abgestützten Topf verbunden, so daß die eingangs erwähnten Nachteile auftreten.

Bei einer praktischen Ausführungsform der Erfindung kann der Topf als Zentrierkegel ausgebildet sein, damit der Tauchkolben beim normalen Fahrbetrieb in einer definierten Position sich auf dem Längslenker abstützt.

Bei den bekannten Luftfedern ist innerhalb des Tauchkolbens ein Stützbolzen angeordnet, der einen als Puffer ausgebildeten Kopf trägt. Bei einer erfindungsgemäß ausgebildeten Luftfeder wird diese Stützeinrichtung durch einen im Topf angeordneten Stützbolzen und einem im Tauchkolben angeordneten Stützkegel gebildet.

Weitere Einzelheiten und Vorteile ergeben sich aus der nachfolgenden Beschreibung der zugehörigen Zeichnungen, in denen eine bevorzugte Ausführungsform einer erfindungsgemäß ausgebildeten Luftfeder in verschiedenen Betriebsstellungen schematisch anhand von Schnittzeichnungen dargestellt ist. In den Zeichnungen zeigt:
- Fig. 1: eine Luftfederachse im normalen Fahrbetrieb,
- Fig. 2: dieselbe Luftfederachse mit entlüfteter und eingefahrener Luftfeder und
- Fig. 3: die Luftfederachse mit entlüfteter und geöffneter Luftfeder.

Bei der dargestellten Luftfederachse ist zwischen einem Teil eines Fahrzeugrahmens 1 und einem an einer Konsole 2 schwenkbar angelenkten Längslenker 3 eine Luftfeder 4 für eine Achse 5 angeordnet.

Die Luftfeder 4 besteht aus einem am Fahrzeugrahmen 1 befestigten Deckel 6, einem Rollbalg 7 und einem sich auf dem Längslenker 3 abstützenden Tauchkolben 8. Der Tauchkolben 8 übergreift einen als Zentrierkegel ausgebildeten Topf 9, der mit einer Bodenplatte 10 auf dem Längslenker 3 befestigt ist.

Im Tauchkolben 8 ist ein nach innen vorkragender Stützkegel 11 befestigt, der sich mit seinem unteren Ende auf einem Stützbolzen 12 im Topf 9 abstützt. Auf der Oberseite des Tauchkolbens 8 ist ein Puffer 13 befestigt, der sich bei entlüfteter Luftfeder gegen die Innenseite des Deckels 6 legt.

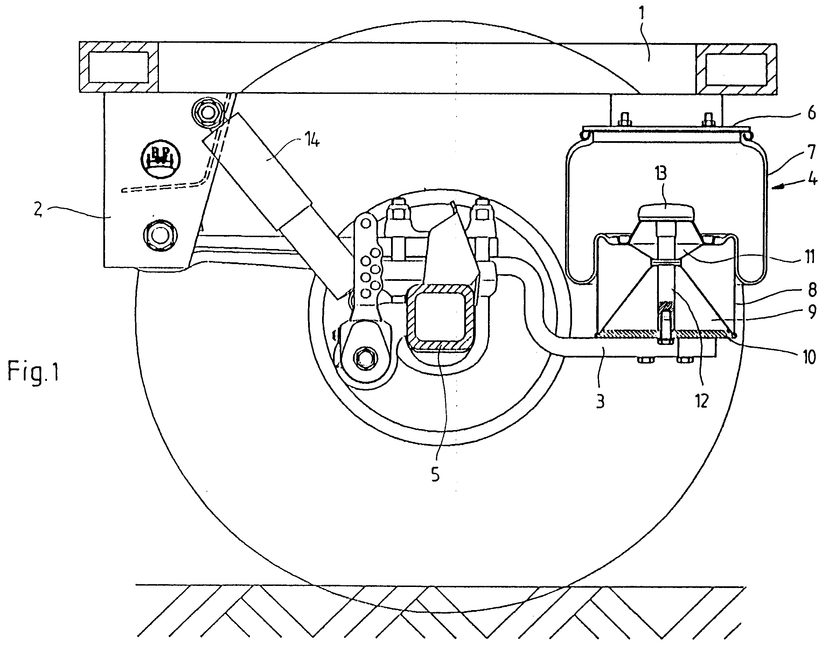

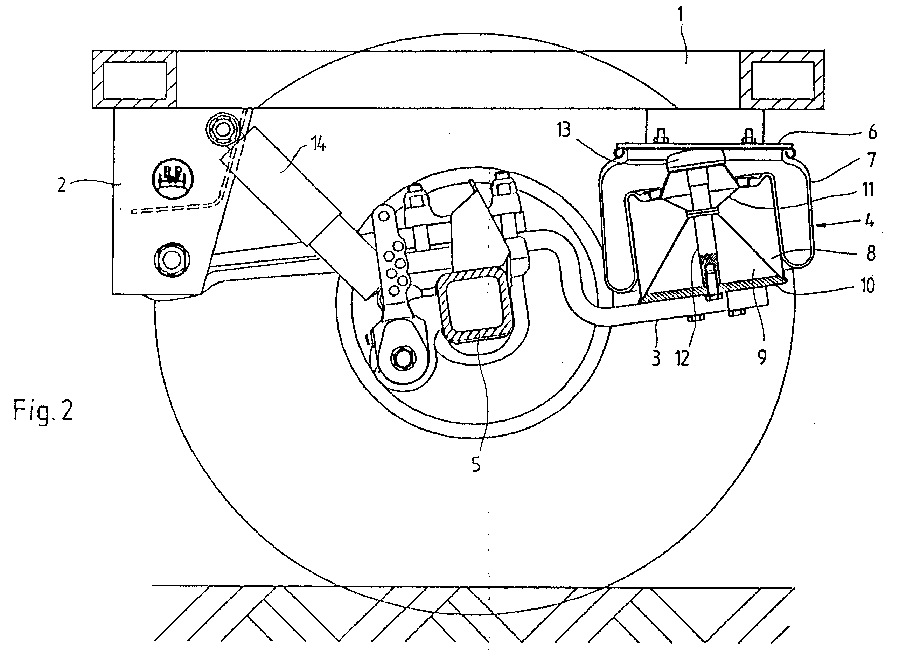

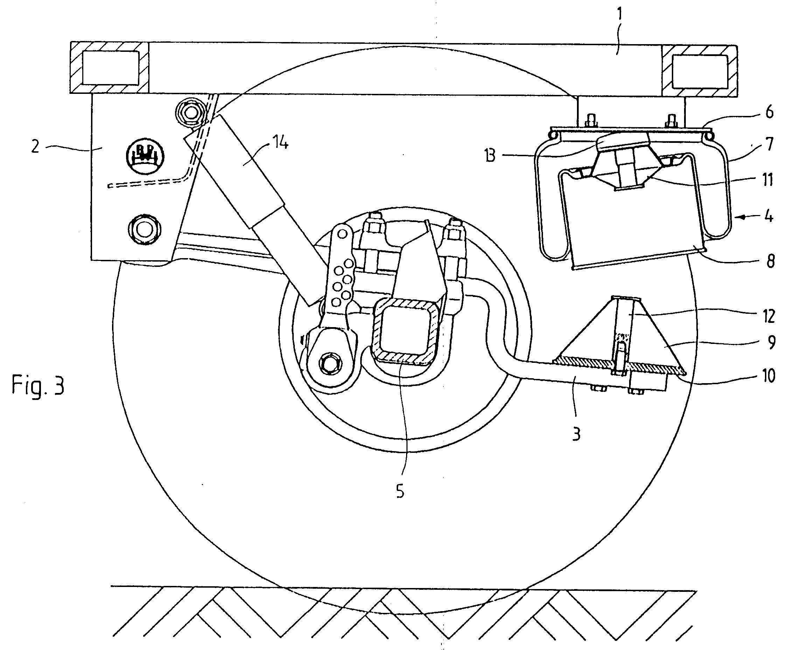

Im normalen Fahrbetrieb (Fig. 1) und bei vollständig entlüfteter Luftfeder 4 (Fig. 2) greifen Tauchkolben 8 und Topf 9 unter dem auflastenden Gewicht des Fahrzeuges formschlüssig ineinander. Wenn aber das Fahrzeug für eine Kran- und Bahnverladung angehoben wird (Fig. 3), kann sich die Achse 5 nach unten bewegen, ohne das Gewicht auf den Rollbalg 7 zu übertragen, weil der Tauchkolben 8 in der entlüfteten Position (Fig. 2) hängen bleibt und sich der Topf 9 aus dem Tauchkolben 8 herausbewegt. Der Tauchkolben 8 wird sich nicht nach unten bewegen, weil der Rollwiderstand des Rollbalges 7 so groß ist, daß er in seiner angehobenen, entlüfteten Position festgehalten wird. Beim Abstellen des Fahrzeuges nach der Kranverladung bewegt sich der Topf 9 wieder in die in Fig. 2 dargestellte Lage.

Während einer Kran- und Bahnverladung wird das Gewicht der Achse 5 von einem zwischen der Konsole 2 und der Achse 5 angeordneten Stoßdämpfer 14 abgefangen.

### Bezugszeichenliste:

- 1: Fahrzeugrahmen
- 2: Konsole
- 3: Längslenker
- 4: Luftfeder
- 5: Achse
- 6: Deckel
- 7: Rollbalg
- 8: Tauchkolben
- 9: Topf
- 10: Bodenplatte
- 11: Stützkegel
- 12: Stützbolzen
- 13: Puffer
- 14: Stoßdämpfer

## Patentansprüche

1. Luftfeder für Luftfederachsen mit einem fahrgestellfesten Deckel (6) und einem Tauchkolben (8) sowie einem dazwischen eingesetzten Rollbalg (7), wobei der Tauchkolben (8) auf einem rückwärtigen Ende eines Längslenkers (3) abgestützt ist,
**dadurch gekennzeichnet,**
daß der Tauchkolben (8) an seiner Unterseite offen ist, daß auf dem Längslenker (3) ein in den Tauchkolben (8) passender Topf (9) befestigt ist und daß Tauchkolben (8) und Topf (9) voneinander getrennte, auseinanderbewegbare Bauteile sind.

2. Luftfeder nach Anspruch 1, dadurch gekennzeichnet, daß der Topf (9) als Zentrierkegel ausgebildet ist.

3. Luftfeder nach Anspruch 2, dadurch gekennzeichnet, daß in dem als Zentrierkegel ausgebildeten Topf (9) ein zentraler Stützbolzen (12) und im Tauchkolben (8) ein Stützkegel (11) angeordnet ist.

## Claims

1. Pneumatic spring for pneumatic-spring axles, having a cover (6) which is fixed to the chassis and a trunk piston (8), and having a roller bellows (7) inserted therebetween, the trunk piston (8) being supported on a rear end of a longitudinal link (3), characterized in that the trunk piston (8) is open on its underside, in that a pot (9) which fits into the trunk piston (8) is attached on the longitudinal link (3), and in that the trunk piston (8) and the pot (9) are components which are separate from one another and can be moved apart.

2. Pneumatic spring according to Claim 1, characterized in that the pot (9) is designed as a centring cone.

3. Pneumatic spring according to Claim 2, characterized in that a central supporting bolt (12) is arranged in the pot (9) designed as a centring cone, and a supporting cone (11) is arranged in the trunk piston (8).

## Revendications

1. Ressort pneumatique pour des essieux à suspension pneumatique, comportant un couvercle (6) fixe avec le châssis, et un piston plongeur (8), ainsi qu'un soufflet déroulant (7) inséré entre les deux, le piston plongeur (8) s'appuyant sur l'extrémité arrière d'un bras oscillant longitudinal (3),
caractérisé en ce que le piston plongeur (8) est ouvert sur son côté inférieur, en ce que sur le bras oscillant longitudinal (3) est fixé un élément formant pot (9) s'adaptant à l'intérieur du piston plongeur (8), et en ce que le piston plongeur (8) et l'élément formant pot (9) constituent des pièces séparées l'une de l'autre pouvant être écartées l'une de l'autre.

2. Ressort pneumatique selon la revendication 1, caractérisée en ce que l'élément formant pot (9) est réalisé sous la forme d'un cône de centrage.

3. Ressort pneumatique selon la revendication 2, caractérisé en ce que dans l'élément formant pot (9) se présentant sous la forme d'un cône de centrage, est disposée une broche d'appui (12) centrale, et dans le piston plongeur (8), un cône d'appui (11).
